# EUROPEAN PATENT APPLICATION

(11) **EP 4 549 112 A1**
(43) Date of publication of application: **07.05.2025**
(21) Application number: 24206627.2
(22) Date of filing: 15.10.2024
(51) Int. Cl.: B26D 5/20, B26D 5/38, B26D 7/06, B26D 1/143, B26D 1/153, B26D 3/28, B26D 7/01, B26D 7/26, F16H 7/02, F16H 7/08

(54) **FOOD PRODUCT SLICER AND ASSOCIATED BELT TENSIONER**

(30) Priority: 03.11.2023 US 202363596018 P; 04.10.2024 US 202418906839
(71) Applicant: Illinois Tool Works Inc., Glenview IL 60025 (US)
(72) Inventor: BIRD, Matthew W., Glenview, 60025 (US); MANJUNAATH, Sumuk, Glenview, 60025 (US); RUTLEDGE, Austin, Glenview, 60025 (US)
(74) Representative: HGF

(57) **Abstract**

A food product slicer includes a base, a knife mounted for rotation relative to the base, the knife having a cutting edge, a carriage mounted to the base for reciprocal movement back and forth past the cutting edge of the knife and a drive assembly for moving the carriage. The drive assembly includes a movable belt and a component fixed to the belt for movement therewith, wherein the component is linked to the carriage such that movement of the component with the belt causes movement of the carriage. The component is configured to operate as a belt tensioner that includes a non-linear path through which a portion of the belt passes to tension the belt.

## Description

### TECHNICAL FIELD

This application relates generally to food product slicers of the type commonly used to slice bulk food products and, more specifically, to a belt tensioner in such a food product slicer.

### BACKGROUND

Typical reciprocating food slicers have a rotatable, circular or disc-like slicing blade, an adjustable gauge plate for determining the thickness of the slice and a carriage for supporting the food as it is moved back and forth past the cutting edge of the knife during slicing. A drive motor is typically linked via a belt to drive the carriage back and forth during an automatic slicing operation carried out by a controller of the slicer. Existing slicers may have some type of belt tensioner, such as an adjustable pulley and shaft assembly that enables adjustment of a spacing between the pulleys around which the belt extends. However, this system is difficult to adjust to achieve proper belt tension. Improper tensioning can lead to belt slippage (under tensioned) or poor belt/bearing/system life (over tensioned). Additional tools and complexity are usually required to achieve proper bolt torque or to ensure proper belt tension.

In other environments, outside of slicers, it is known to utilize a special torsion spring that engages onto and moves with the belt. However, the high forces and acceleration that occur during movement of a food slicer carriage are not conducive to use of such a torsion spring tensioner.

Accordingly, it would be desirable to provide a slicer with an improved belt tensioner.

### SUMMARY

In one aspect, a food product slicer includes a base, a knife mounted for rotation relative to the base, and a carriage assembly mounted to the base for reciprocal movement back and forth past a cutting edge of the knife. A drive is linked to move the carriage assembly, wherein the drive comprises a belt and a belt tensioner that is configured to provide a non-linear path through which a portion of the belt passes to tension the belt.

In implementations, the belt tensioner comprises a clamp assembly.

In another aspect, a food product slicer includes a base, a knife mounted for rotation relative to the base, the knife having a cutting edge, a carriage mounted to the base for reciprocal movement back and forth past the cutting edge of the knife and a drive assembly for moving the carriage. The drive assembly includes a movable belt and a component fixed to the belt for movement therewith, wherein the component is linked to the carriage such that movement of the component with the belt causes movement of the carriage. The component is configured to operate as a belt tensioner that includes a non-linear path through which a portion of the belt passes to tension the belt.

In a further aspect, food product slicer includes a base, a knife mounted for rotation relative to the base, the knife having a cutting edge, a carriage mounted to the base for reciprocal movement back and forth past the cutting edge of the knife and a drive assembly for moving the carriage. The drive assembly includes a movable belt and a component clamped to the belt for movement therewith. The component is linked to the carriage such that movement of the component with the belt causes movement of the carriage. A configuration of a clamping engagement of the component onto the belt is such that the belt is tensioned by the clamping engagement, and such that a release of the clamping engagement of the component onto the belt reduces tension of the belt.

In still another aspect, a method is provided for tensioning a belt in a food product slicer that includes a carriage mounted for reciprocal movement back and forth past a cutting edge of a knife. The method involves linking the carriage for movement with the belt by clamping a component onto the belt in a manner that forces part of the belt to follow a non-linear path thereby simultaneously tensioning the belt as the part of the belt takes on the non-linear path.

### BRIEF DESCRIPTION OF DRAWINGS

Figs. 1 and 2 show a food product slicer;
Fig. 3 shows the food product slicer with body removed to reveal internal parts;
Figs. 4 and 5 show views of the belt dive assembly;
Figs. 6-9 show a connection to the belt;
Figs. 10-13 show a clamping assembly that makes the connection; and
Figs. 14-16 show an alternative arrangement in which the non-linear shape of the clamping assembly is different.

### DETAILED DESCRIPTION

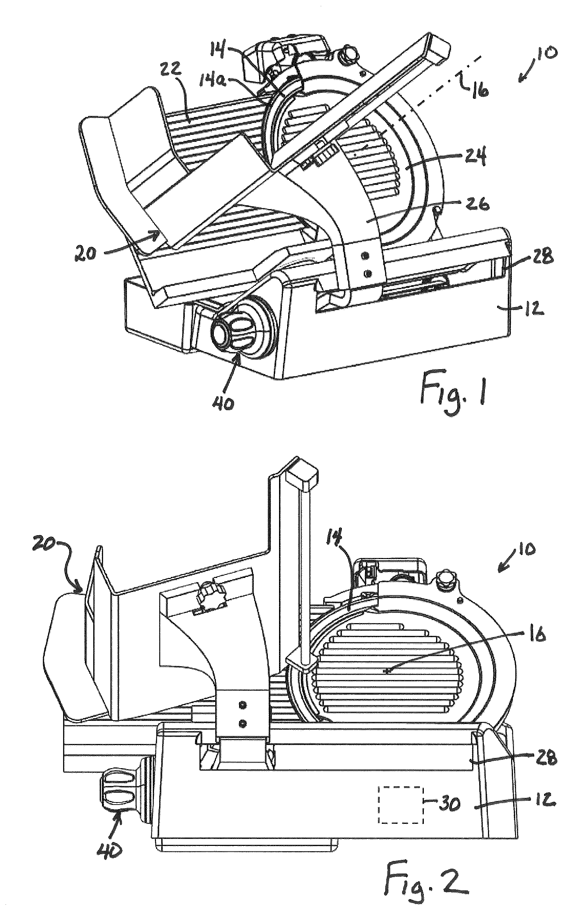

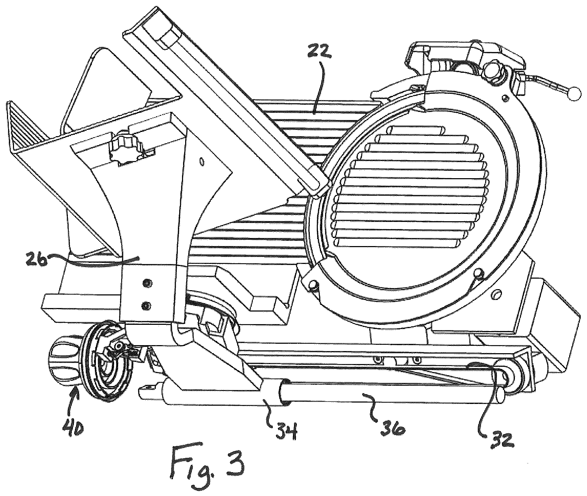

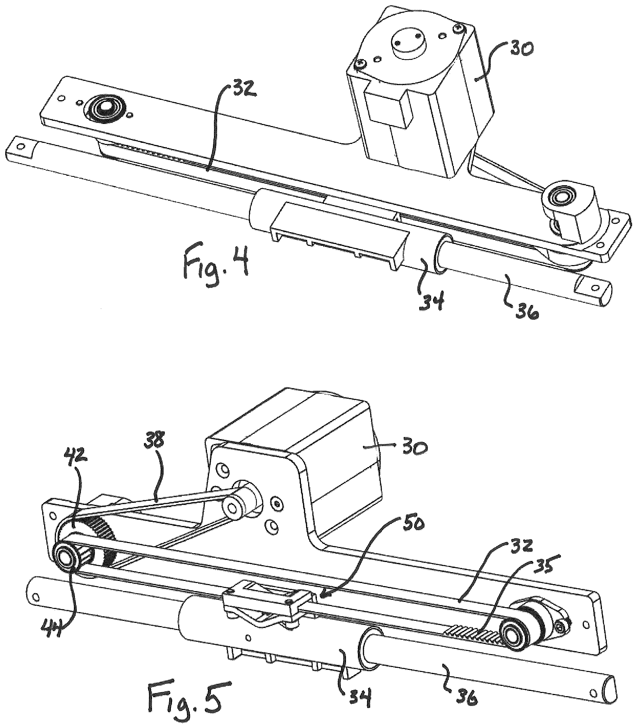

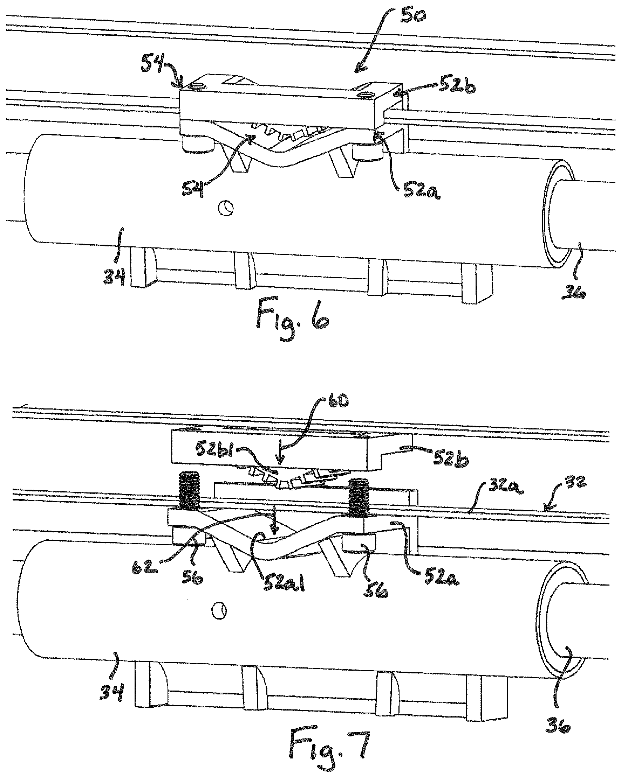

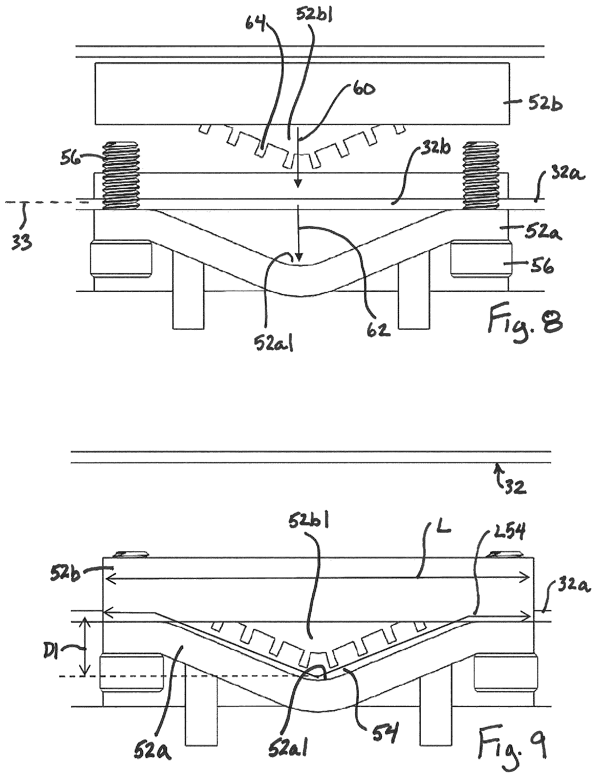

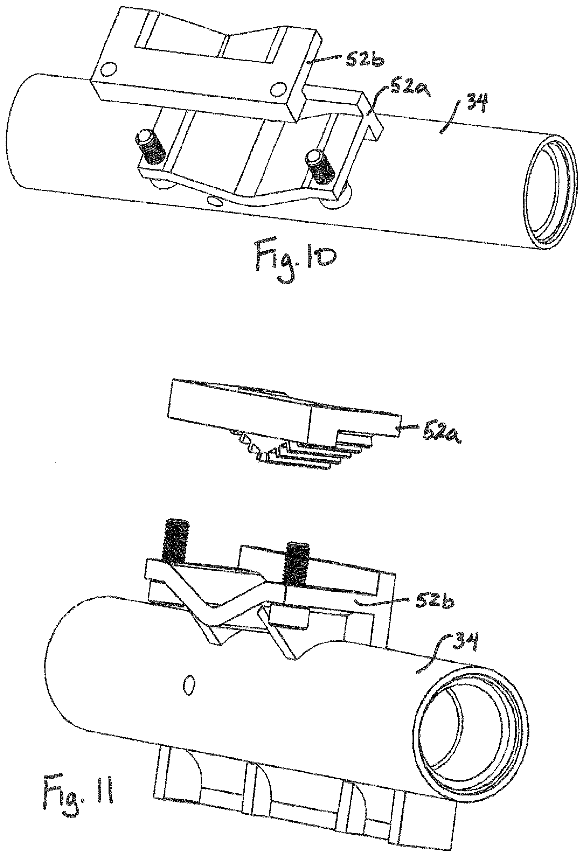

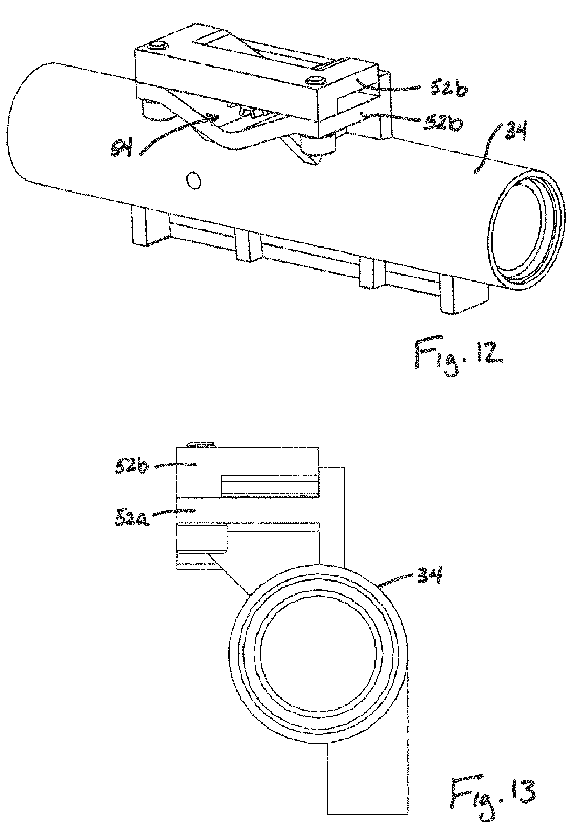

Referring to Figs. 1-13, a food product slicer 10 includes a housing or base 12 and a circular, motor-driven slicing knife 14 that is mounted to the housing for rotation about an axis 16. Fig. 2 depicts a right-side view of the slicer. The left side of Fig. 2, where the controls are located, is generally referred to as the front side of the slicer (which is where an operator stands for slicing), the right side of Fig. 2 is generally referred to as the rear side of the slicer. A food product can be supported on a manually operable (or motor driven) food carriage 20 which moves the food product to be sliced past the cutting edge 14a of the rotating slicing knife 14. The food carriage 20 reciprocates from left to right relative to Fig. 2, along a linear path so that the lower end of the bulk food product slides along the surface of a gauge plate 22, is cut by the knife 14 and then slides along a knife cover plate 24. A gauge plate system includes a rotatable knob 40 that that is linked to adjust the position of the gauge plate for slice thickness control.

The food carriage 20 includes a tray mounted on a tray arm 26 that orients the food carriage tray at the appropriate angle (typically perpendicular) to the knife cutting-edge plane. The food carriage arm reciprocates in a slot 28 at a lower portion of the housing 12. The carriage 20 can be automatically driven. Here, an internal motor 30 drives a belt 32, which follows a looped path and may include teeth 35 (only some of which are shown here), where the belt is linked internally to a tubular transport part 34 that is connected the arm 26, and the tubular transport part rides along a slide rod 36. In particular, the motor 30 moves an output belt 38 to rotate a gear 42, that in turn includes a drive pulley 44 that is engaged with the belt 32, and the belt 32 also extends about a spaced apart idler pulley 46. In implementations, a spacing between the axes of the pulleys may be between about 400 mm and 500 mm, such as between about 430 mm and 470 mm.

The transport part 34 is coupled to the belt 32 for movement with the belt by a belt connection 50. In this case, the belt connection also operates as a belt tensioner. To this end, the belt connection 50 is formed as a clamping assembly 52 that defines a non-linear path 54 for the portion of the belt to which the clamping assembly is engaged. The clamping assembly includes a bracket segment 52a that is integral with or fixed on the transport part 34, and a clamp plate 52b that connects to the bracket segment 52a such that the portion of the belt 32 is squeezed between the clamp plate 52b and the bracket segment 52a and the belt takes on the shape of the non-linear path. Fasteners 56 are used to connect the clamp plate 52b to the bracket segment 52a, while the belt 32 is already looped around the pulleys in a taught manner (e.g., no material slack in the belt). As the clamp plate moves closer to the bracket segment 52a, per arrow 60, the belt 32 is pushed/moved, per arrow 62, by a protruding part 52b1 of the clamp plate 52b into a recessed part 52a1 of the bracket segment 52a, causing the belt to begin to take on the shape of the non-linear path 54, which increases the overall length traversed by the belt 32 and automatically tensions the belt 32, with tensioning completed when the final position of the clamp plate 52b on the bracket segment 52a is achieved.

In the illustrated embodiment, the shape of the non-linear path 54 is a V-shape or U-shape in side profile. Steeper or shallower V-shapes or U-shapes are possible. Other shapes are also possible. For example, the non-linear path could be an arcuate or other curved path, or the non-linear shape could be any undulating path that includes one or more undulations.

In the illustrated embodiment, the non-linear path 54 is defined between the protruding part 52b1 of the clamp plate 52b and the recessed part 52a1 of the bracket segment 52a. However, the protruding part could be on the bracket segment 52a and the recessed part could be on the clamping plate 52b, or both the bracket segment 52a and the clamping plate 52b could include both protruding and recessed parts that align and correspond to each other to, in combination, define the non-linear path 54.

In the illustrated embodiment, the protruding part 52b1 includes a series of teeth 64 64 that engage with the surface of the belt to assist in the clamping operation. However, in other embodiments, the teeth could be eliminated.

In the illustrated embodiment, the non-linear path that results in belt tensioning is formed as a clamping assembly to engage the belt. However, in other embodiments, the non-linear path could be a fixed path into which the belt is manually engaged (e.g., by manual routing), without any clamping operation taking place.

In implementations, the belt tensioner is configured such that a tension of about 10-15 pounds is placed on the belt, such as a tension of about 12-14 pounds.

In implementations, an overall length L54 of the non-linear path 54 is at least 4% larger than a linear path L that the portion of the belt would normally follow in the absence of being routed along the non-linear path.

In implementations, a segment 32a of the belt is movable along a substantially linear path 33 during movement of the carriage and the portion 32b of the belt that is clamped is located along the segment 32a. The non-linear path is configured such that at least part of the portion 32b of the belt is offset from the linear path by a distance D1 that is at least 4 mm (e.g., at least 5 mm or at least 6mm or at least 7mm or at least 8mm, such as between 8-12mm). For the purpose determining such distance D1, the measurement may be taken form a mid-point of a thickness of the belt part that is clamped to a mid-point of a thickness of the belt part that is not clamped.

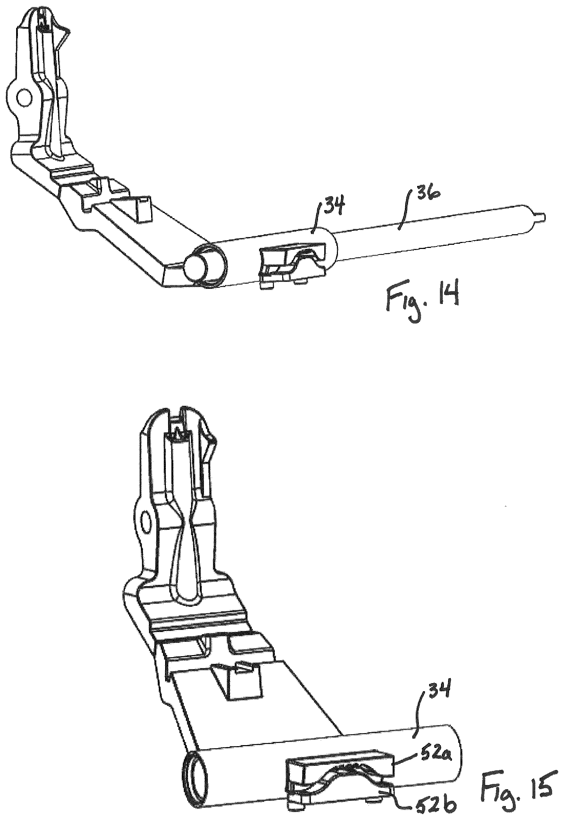

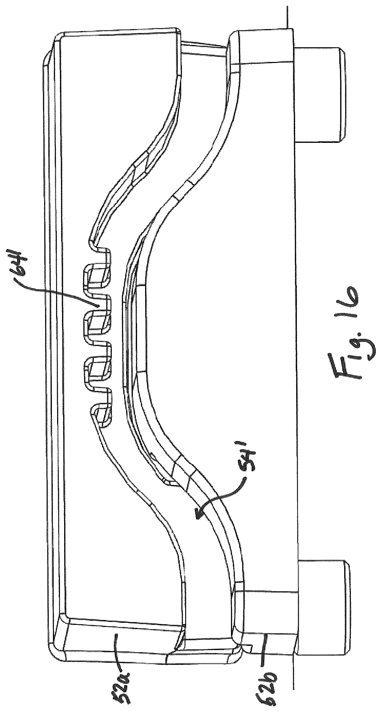

It is to be clearly understood that the above description is intended by way of illustration and example only and is not intended to be taken by way of limitation. Variations are possible. For example, Figs. 14-16 show an alternative arrangement in which a shape of the non-linear path 54' is slightly different, and in which the belt engaging teeth 64' are formed on bracket segment 52a.

## Claims

1. A food product slicer, comprising:
a base;
a knife mounted for rotation relative to the base, the knife having a cutting edge;
a carriage mounted to the base for reciprocal movement back and forth past the cutting edge of the knife;
a drive assembly for moving the carriage, wherein the drive assembly comprises a movable belt and a component fixed to the belt for movement therewith, wherein the component is linked to the carriage such that movement of the component with the belt causes movement of the carriage, wherein the component is configured to operate as a belt tensioner that includes a non-linear path through which a portion of the belt passes to tension the belt.

2. The food product slicer of claim 1, wherein the component comprises a clamp assembly.

3. The food product slicer of claim 2, wherein the clamp assembly includes a protruding part and a recessed part that, together, are configured to define a shape of at least part of the non-linear path.

4. The food product slicer of claim 3, wherein at least one of the protruding part and the recessed part include a plurality of teeth that engage with the portion of the belt.

5. The food product slicer of claim 3, wherein the shape of the non-linear path is U-shaped or V-shaped.

6. The food product slicer of claim 2, wherein the clamp assembly engages the portion of the belt to link the carriage to the drive assembly.

7. The food product slicer of claim 6, wherein the clamp assembly includes a first portion fixed to a transport that is connected to carriage, and a second portion that clamps onto the first portion.

8. The food product slicer of claim 7, wherein the transport is a tubular part the moves along a slide rod.

9. The food product slicer of claim 1, wherein a segment of the belt is movable along a substantially linear path during movement of the carriage, where in the portion of the belt is located along the segment of the belt, wherein the non-linear path is configured such that at least part of the portion of the belt is offset from the linear path by at least 4 mm.

10. The food product slicer of claim 1, wherein the non-linear path is configured, at least in part, as an undulating path that forces the portion of the belt to take on a corresponding undulating shape.

11. A food product slicer, comprising:
a base;
a knife mounted for rotation relative to the base, the knife having a cutting edge;
a carriage mounted to the base for reciprocal movement back and forth past the cutting edge of the knife;
a drive assembly for moving the carriage, wherein the drive assembly comprises a movable belt and a component clamped to the belt for movement therewith, wherein the component is linked to the carriage such that movement of the component with the belt causes movement of the carriage, wherein a configuration of a clamping engagement of the component onto the belt is such that the belt is tensioned by the clamping engagement, and such that a release of the clamping engagement of the component onto the belt reduces tension of the belt.

12. The food product slicer of claim 11, wherein a segment of the belt is movable along a substantially linear path during movement of the carriage, wherein the clamping engagement of the component onto the belt offsets at least part of the belt from the linear path by at least 4 mm.

13. The food product slicer of claim 11, wherein the clamping engagement of the component onto the belt forces at least part of the belt to bend into an undulating shape.

14. A method of tensioning a belt in a food product slicer that includes a carriage mounted for reciprocal movement back and forth past a cutting edge of a knife, the method comprising:
linking the carriage for movement with the belt by clamping a component onto the belt in a manner that forces part of the belt to follow a non-linear path thereby simultaneously tensioning the belt as the part of the belt takes on the non-linear path.

15. The method of claim 14, wherein a segment of the belt is movable along a substantially linear path during movement of the carriage, wherein the clamping of the component onto the belt offsets at least part of the belt from the linear path by at least 4 mm.
